# EUROPEAN PATENT APPLICATION

(11) **EP 2 048 822 A1**
(43) Date of publication of application: **15.04.2009**
(21) Application number: 06768046.2
(22) Date of filing: 10.07.2006
(51) Int. Cl.: H04L 12/28

(54) **DATA REPEATING SYSTEM AND DATA REPEATING METHOD**

(71) Applicant: Mitsubishi Electric Corporation, Chiyoda-ku Tokyo 100-8310 (JP)
(72) Inventor: KOGUCHI, Kazuumi, Tokyo 100-8310 (JP); YAMADA, Hirotoshi, Tokyo 100-8310 (JP); KOTAKA, Kazunori, Tokyo 100-8310 (JP); KOBAYASHI, Tsuyoshi, Tokyo 100-8310 (JP)
(74) Representative: Zech, Stefan Markus
(86) International application number: PCT/JP2006/313684
(87) International publication number: WO 2008/007418

(57) **Abstract**

When relaying data between devices at distant locations by using a single frequency, a relay device interposed in the middle of a transmission section can accommodate newly-added terminals, so that limitation on connection of the relay device can be relieved. Specifically, it is configured to include a master 10, REPs 20 and 30 that are connected to the master 10 by a time division multiple access and relay data from or to the master 10 by using a signal of a single frequency (frequency F1), and slaves 21, 22, and 31 to 33 that are connected to the REPs 20 and 30. The REPs 20 and 30 are configured to operates as a master for the slaves 21, 22, and 31 to 33.

## Description

### TECHNICAL FIELD

The present invention relates to a data relay system and a data relay method for relaying data between devices at distant locations.

### BACKGROUND ART

A time division multiple access (TDMA) is known as a scheme of a media access control (MAC). The TDMA is an access control scheme for establishing a communication between a base station (master) device and a plurality of sub station (slave) devices. The TDMA has characteristics such that media (communication cables, radio channels, or power lines) are accessed through a plurality of divided time slots, so that the slave devices can be efficiently accommodated.

When a communication is established between a master device and a slave device in a long-distance communication, the TDMA can offer the long-distance communication by connecting the devices via an optical fiber. On the other hand, if a radio channel or a power line is used, for example, because much more signal attenuation occurs compared to the case of using the optical fiber, signals need to be relayed during transmission to establish a desired communication between the master device and the slave device at distant locations.

Conventionally, as a method of relaying data by radio, for example, a relay method of relaying data by using different frequencies has been known. However, even in the method of relaying data by radio, if available frequency channels are limited as is the case for a wireless LAN or the like, it may be difficult to secure a sufficient distance between nodes to which the same frequencies are allocated. Therefore, it is difficult to prevent an interference accompanied by relaying data.

Meanwhile, a method of relaying data is disclosed, in which occurrence of an interference can be prevented even when a single frequency is used by performing communication between nodes intermittently (see Patent Document 1).

Patent Document 1: Japanese Patent Application Laid-open No. 2005-143046 (pages. 4 to 6, Fig. 1)

### DISCLOSURE OF INVENTION

### PROBLEM TO BE SOLVED BY THE INVENTION

However, in the conventional technology disclosed in the Patent Document 1, relaying of communication data is considered simply between devices that are directly associated with a relay transmission, but not between devices that are not directly associated with a relay transmission. More particularly, when providing a service for accessing the Internet, if a transmission configuration that can accommodate home user terminals and relay data from the user terminals to a station building is to be provided, it is preferable to arrange a repeater that can accommodate newly-added home user terminals and relay data from those user terminals to the station building. However, with a technique of using repeaters disclosed in the conventional technology, it is difficult to accommodate newly-added terminals by a repeater arranged in the middle of a transmission section.

Furthermore, the conventional technology is only applicable to a case where repeaters are arranged in series. Therefore, when repeaters are arranged in parallel or in a branched manner, the above relay method cannot be applied.

The present invention has been made to solve the above problems in the conventional technology and it is an object of the present invention to provide a data relay method and a data relay system that, when relaying data by using a single frequency between devices at distant locations, allows a repeater arranged in the middle of a transmission section to accommodate newly-added terminals, so that the limitation on connection of relay devices can be relieved.

### MEANS FOR SOLVING PROBLEM

To solve the above problems and achieve the above object, a data relay system of the present invention includes a base station device; at least one relay device that is connected to the base station device by a time division multiple access and relays data from or to the base station device by using a signal of a single frequency; and a sub station device that is connected at least to the relay device by a time division multiple access, wherein the relay device functions as a base station device for the sub station device connected to the relay device.

### EFFECT OF THE INVENTION

According to a data relay system of the present invention, a repeater device, which is connected to a base station device by a time division multiple access and relays data from or to the base station device with signals of a single frequency, can operate as a base station for sub station devices that are connected to the repeater device by a time division multiple access. Therefore, the repeater device can accommodate newly-added terminals. As a result, limitation on connection of repeater devices, for example, limitation in which repeater devices are only allowed to be arranged in series, can be relieved.

### BRIEF DESCRIPTION OF DRAWINGS

[Fig. 1] Fig. 1 is a schematic diagram of a connection configuration of a data relay system according to a first embodiment of the present invention.
[Fig. 2] Fig. 2 is a schematic diagram illustrating a concept of a data relay method employed in the data relay system shown in Fig. 1.
[Fig. 3] Fig. 3 is a time chart illustrating operation timings of each device shown in Fig. 2.
[Fig. 4] Fig. 4 is a schematic diagram illustrating a connection configuration of a data relay system according to a third embodiment of the present invention, and a concept of a data relay method employed in the data relay system.
[Fig. 5] Fig. 5 is a time chart illustrating operation timings of each device shown in Fig. 4.
[Fig. 6] Fig. 6 is a schematic diagram illustrating a connection configuration of a data relay system according to a fourth embodiment of the present invention, and a concept of a data relay method employed in the data relay system.
[Fig. 7] Fig. 7 is a time chart illustrating operation timings of each device shown in Fig. 6.
[Fig. 8] Fig. 8 is a schematic diagram illustrating a connection configuration of a data relay system according to a fifth embodiment of the present invention, and a concept of a data relay method employed in the data relay system.
[Fig. 9] Fig. 9 is a time chart illustrating operation timings of each device shown in Fig. 8.
[Fig. 10] Fig. 10 is a table illustrating operation timings at which each device performs a master operation or a slave operation within an operation period.
[Fig. 11] Fig. 11 is a sequence diagram illustrating an operation for switching to a new operation table.
[Fig. 12] Fig. 12 is a schematic diagram illustrating an example of a modified configuration of the data relay system according to the present invention (an REP is added).
[Fig. 13] Fig. 13 is a schematic diagram illustrating an operation for switching to a new parameter when a system configuration is changed.
[Fig. 14] Fig. 14 is a schematic diagram for explaining a communication between devices without using a repeater.
[Fig. 15] Fig. 15 is a schematic diagram for explaining a relay transmission via repeaters by using a plurality of frequencies.
[Fig. 16] Fig. 16 is a schematic diagram for explaining a problem with an interference accompanied by a relay transmission.
[Fig. 17] Fig. 17 is a schematic diagram illustrating a concept for accommodating home user terminals by each repeater.
[Fig. 18] Fig. 18 is a schematic diagram illustrating an example of a configuration in which repeaters accommodating home user terminals are connected to a base station in a branched manner.

### EXPLANATIONS OF LETTERS OR NUMERALS

10 master (base station)
11, 21 to 25, 31 to 33, 41, 42, 51, 52, 61, 62 slave (sub station, terminal)
20, 30, 40, 50, 60 REP (Reapeater)

### BEST MODE(S) FOR CARRYING OUT THE INVENTION

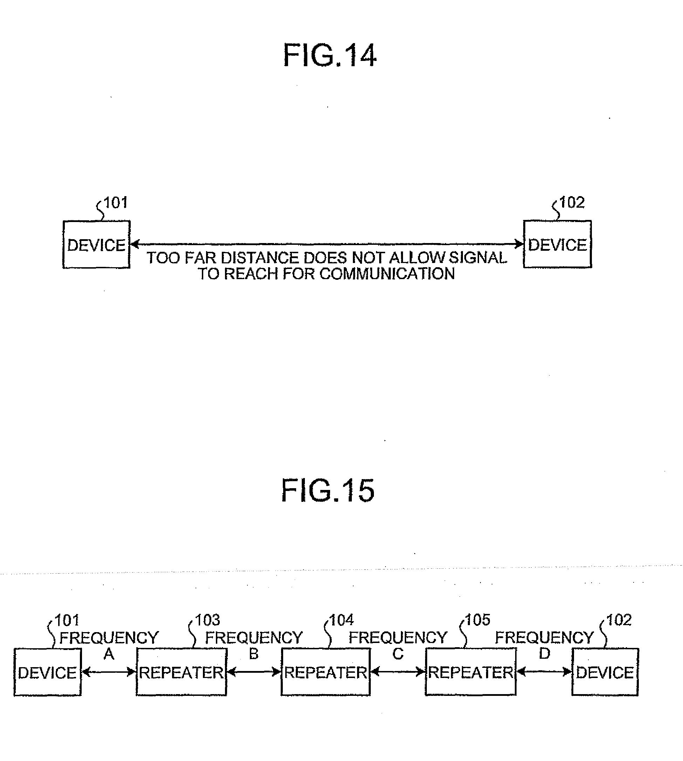

Before describing exemplary embodiments of a data relay method and a data relay system of the present invention, three problems that are pointed out in the above description, that is, (1) a problem with an interference accompanied by a relay transmission, (2) a problem with accommodating terminals by a repeater, and (3) a problem with limitation on a connection configuration of repeaters, are described below with reference to Figs. 14 to 18.

### (Problem with an interference accompanied by a relay transmission)

As shown in Fig. 14, when a distance between a device 101 and a device 102 is too far, communication data cannot reach each other only by the devices. Therefore, as shown in Fig. 15, a plurality of repeaters (in the example of this figure, repeaters 103 to 105) is interposed between the devices 101 and 102, and caused to relay communication data by using different frequencies so that an interference with communication between the devices and the repeaters or among the repeaters can be prevented.

However, when available frequency channels are limited as is the case for a wireless LAN, it may be difficult to secure a sufficient distance between a node in a zone to which a predetermined frequency is allocated and another node in another zone to which the same predetermined frequency is allocated. As a result, an interference may occur. For example, in the example shown in Fig. 15, if only three different frequencies are available, a frequency A and a frequency D have to be set to the same frequencies.

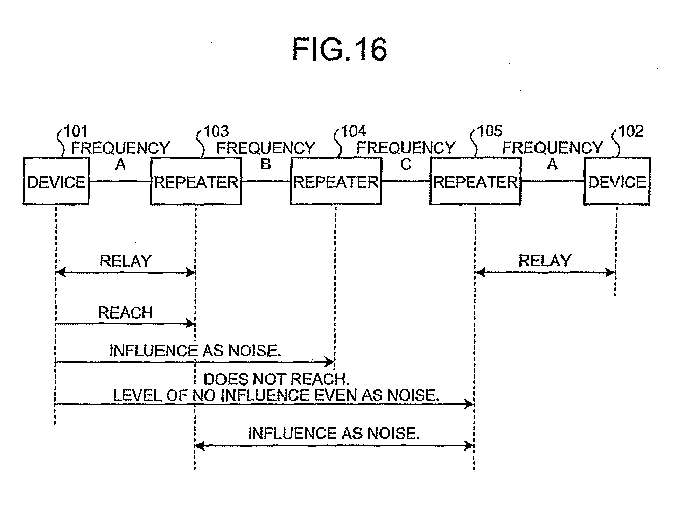

In this case, however, an interference may occur between the device 101 that uses the frequency A and is on the left end in Fig. 15 and the device 102 that uses the frequency D (that is, the frequency A) and is on the right end in Fig. 15. This is because, as shown in Fig. 16, while signals at levels sufficient for transmission and reception reach an adjacent device, if a distance becomes longer than that, the signals are attenuated only to a level lower than the level sufficient for transmission and reception and is not attenuated to a level of no influence even as noise.

More particularly, as shown in Fig. 16, when assuming that the device 101 communicates with the repeater 103 at the frequency A and the repeater 105 communicates with the device 102 also at the frequency A, and if the repeater 103 transmits a signal to the device 101 at the frequency A, the same signal also reaches an opposite side. Concretely, the signal transmitted from the repeater 103 reaches the repeater 105 at a level of influence as noise. At this state, when the repeater 105 attempts to receive a signal from the device 102, the signal from the device 102 and the signal from the repeater 103 interfere with each other. As a result, the repeater 105 cannot receive the signal normally.

### (Problem with accommodating terminals by a repeater)

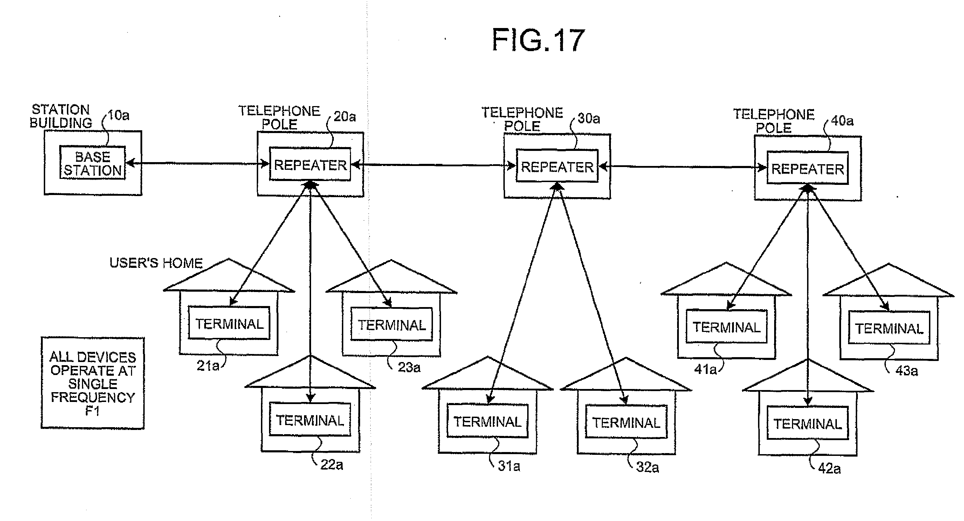

When providing, for example, a service for accessing the Internet, it is preferable to configure such that, as shown in Fig. 17, repeaters 20a, 30a, and 40a that relay data from a base station 10a accommodate home user terminals 21a to 23a, home user terminals 31a and 32a, and home user terminals 41a to 43a, respectively, and relay data from those user terminals to a station building. However, in the conventional technology, relaying of communication data is considered simply between the two devices 101 and 102 as shown in Fig. 15, but not between devices that do not directly associated with a relay transmission. Therefore, a connection configuration as shown in Fig. 17 cannot be achieved with the conventional technology.

### (Limitation on a connection configuration of repeaters)

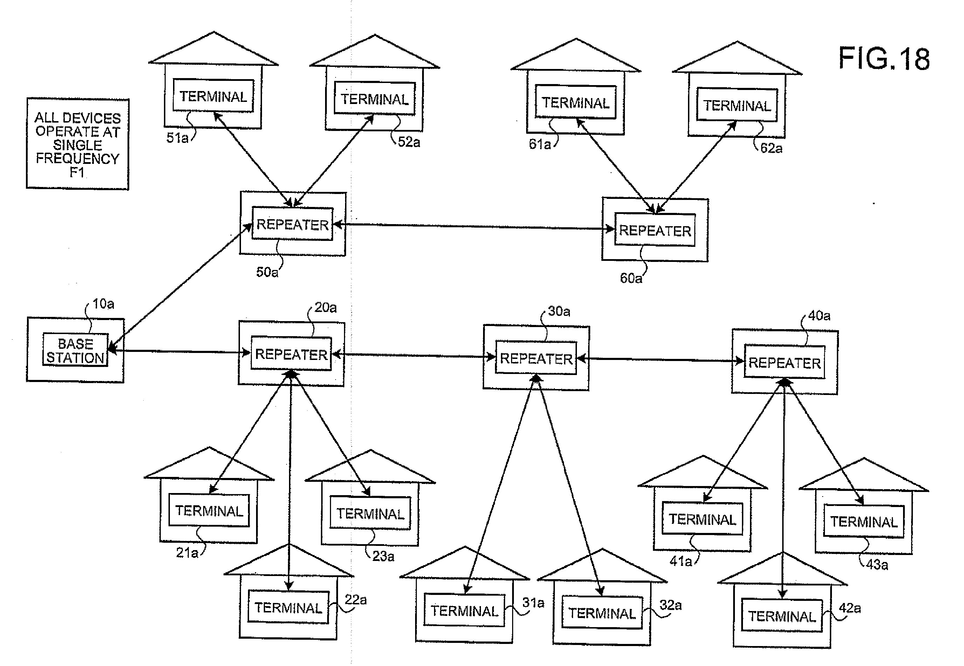

In addition, the conventional technology is applicable only when repeaters are arranged in series as shown in Fig. 17. Therefore, the conventional technology cannot be applied to a network configuration with a branching connection in which, as shown in Fig. 18, the repeater 20a and a repeater 50a are connected to the base station 10a in a branched manner.

The inventors of the present invention have examined the above three problems and made a data relay system and a data relay method that can solve those problems. Now, exemplary embodiments of a data relay system and a data relay method of the present invention are described in detail below with reference to the accompanying drawings. The present invention is not limited to the following embodiments.

### Embodiment 1.

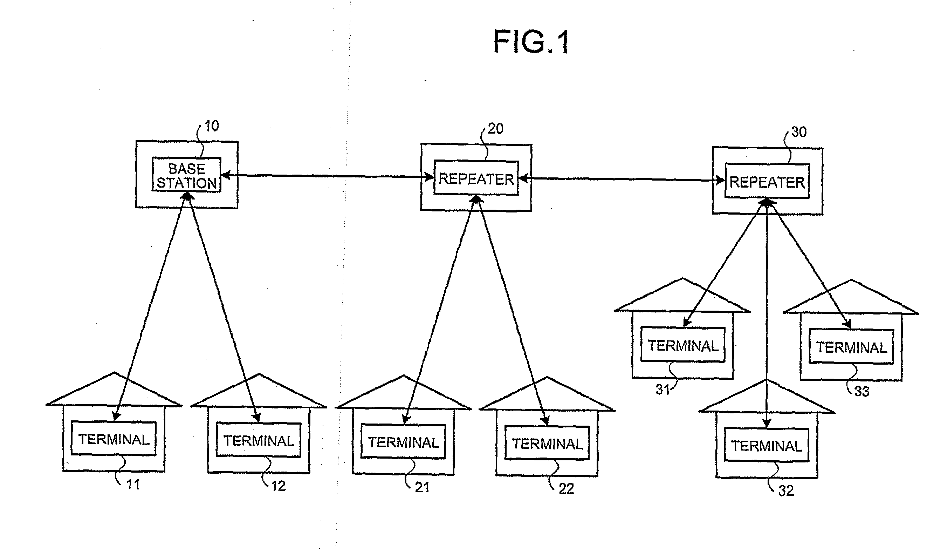

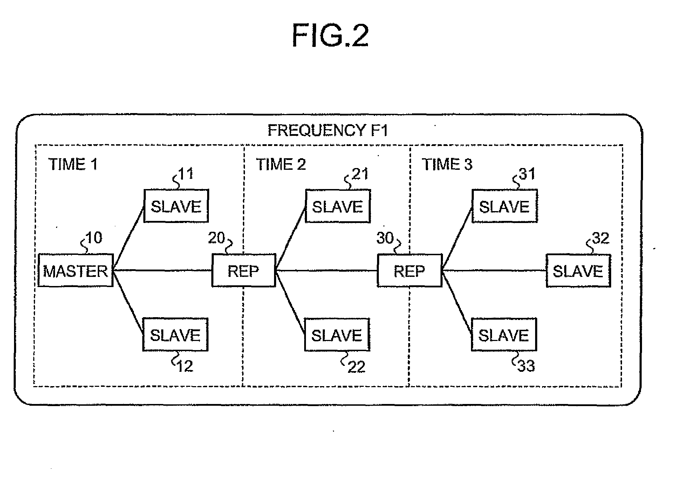

Fig. 1 is a schematic diagram of a connection configuration of a data relay system according to a first embodiment of the present invention. Fig. 2 is a schematic diagram illustrating a concept of a data relay method employed in the data relay system shown in Fig. 1.

### (System configuration)

In Figs. 1 and 2, the data relay system according to the first embodiment includes a master device (hereinafter, "master"), a Repeater device (hereinafter, "REP"), and a slave device (hereinafter, "slave"). Here, a master 10 is a base station device in a TDMA and slaves 11 and 12 are sub station devices connected to the master 10. Besides, REPs 20 and 30 are repeater devices in the TDMA, and slaves 21, 22, and 31 to 33 are sub station devices connected to the REPs, respectively. While, in the figures, the number of the slaves is set to two for each master and set to either two or three for each REP, it is possible to connect as many slaves as those that can be accommodated by each device in the TDMA. Even when the number of devices to be connected increases, operations described below are not changed.

### (System operation)

An operation by the data relay system according to the first embodiment is described below. It is assumed that all devices shown in Fig. 2 operate at a single frequency F1. Furthermore, it is assumed that all the devices operate every three frame times in the TDMA to prevent occurrence of an interference. The three frames (times) are represented by a time 1, a time 2, and a time 3, respectively.

As shown in Fig. 2, the master 10, the slaves 11, 12, and the REP 20 operate at the time 1; the REP 20, the slaves 21, 22, and the REP 30 operate at the time 2; and the REP 30 and the slaves 31 to 33 operate at the time 3. Thereafter, the operations at the times 1 to 3 are performed repeatedly.

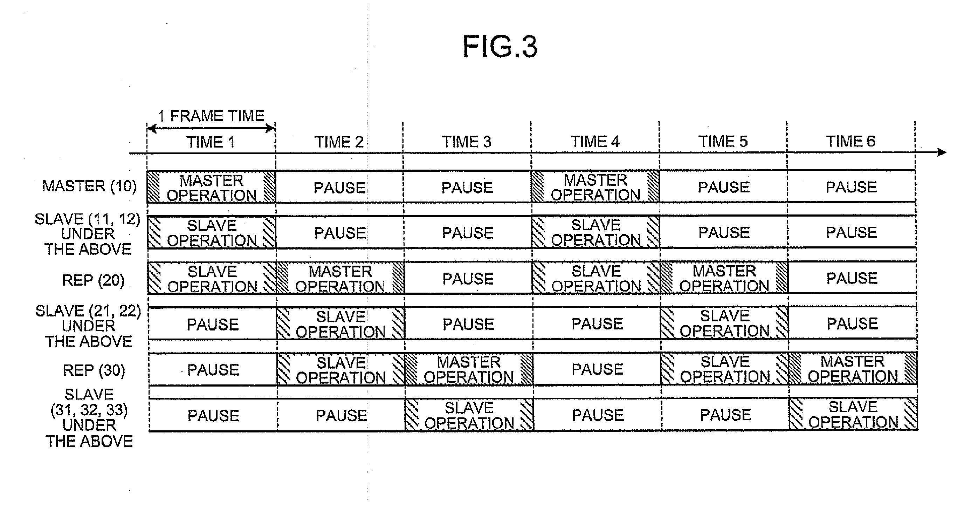

Fig. 3 is a time chart illustrating operation timings of each device shown in Fig. 2. In the following descriptions, "master operation" indicates an operation when a device functions as a master device, and "slave operation" indicates an operation when a device functions as a slave device.

In Fig. 3, operations are performed as follows:
(1) At the time 1, the master 10 performs the master operation and the slaves 11, 12, and the REP 20 perform the slave operation.
(2) At the time 2, the REP 20 performs the master operation and the slaves 21, 22, and the REP 30 perform the slave operation.
(3) At the time 3, the REP 30 performs the master operation and the slaves 31 to 33 perform the slave operation.
(4) After a time 4, the operations at the times 1 to 3 are performed repeatedly.

In this manner, in the data relay method (relay system) according to the first embodiment, an operation time is divided for each pair of a master and a slave in the TDMA. Therefore, even if a single frequency is used multiple times, an interference hardly occurs.

Furthermore, the master and the slaves are caused to perform a normal master operation and a normal slave operation in the TDMA and to perform a pause operation at times other than at a time when performing own operations. Therefore, specific functions need not be added.

While the REP needs to perform both the slave operation and the master operation, it is not necessary to perform these operations simultaneously. That is, the REP is caused to perform only one operation at one time such that the REP performs the slave operation at a certain time and the master operation at another time.

Furthermore, when performing the master operation, the RFP transmits data to a lower-level device (a lower-level slave and/or a lower-level REP) and stores therein data received from the lower-level device. Besides, when performing the slave operation, the REP stores therein data received from an upper-level device (an upper-level master and/or an upper-level REP), and transmits the data to the upper-level device. Thus, the REP can relay both uplink data and downlink data through the above processes.

### (Timing recognition process by each device)

A process for recognizing an operation timing by each device is described below with reference to Fig. 3.

The following parameters are set to three types of devices, i.e., the master, the slave, and the REP:
(1) A device type (set one of the master, the slave, and the REP) .
(2) An operation period.

Furthermore, the following parameters are set for each device type:
(1) The master: a MAC address of own device.
(2) The slave: a MAC address of the master.
(3) The REP: a MAC address of the master and a MAC address of own device.
   The operation period is the same as the total number of the master and the REPs.
   When the above parameters are set, each device is enabled to operate as follows.

### (Operation by the master)

The master starts the master operation at an arbitrary timing when booted. Thereafter, the master operates as a master at "operation period" intervals set as a parameter. The master pauses at times other than at a time when operating as the master (see a section of the master (10) in Fig. 3). Because the master according to the first embodiment is a master in the TDMA, a signal indicating a head of a frame (hereinafter, referred to as "Beacon") is transmitted by being inserted in the head of a frame. Furthermore, a MAC address of own device is inserted in the Beacon.

### (Operation by the slave)

The slave searches for a Beacon containing a MAC address that matches "a MAC address of the master" that is contained in own device. When receiving a desired Beacon, the slave operates as a slave at a frame time when the Beacon is received, and thereafter, operates as a slave at "operation period" intervals. The slave pauses at other times (see sections of the slaves in Fig. 3).

### (Operation by the REP)

Similar to the above operation by the slave, the REP searches for a Beacon, and when confirming a desired Beacon (i.e., confirming that a MAC address contained in the Beacon matches "a MAC address of the master" contained in own device), the REP starts operating as a slave at "operation period" intervals. Then, at a frame time right after the operation as a slave, the REP operates as a master. When performing the master operation, the REP inserts a MAC address of own device in the Beacon and transmits the Beacon (see sections of the REPs in Fig. 3).

In this manner, by setting the parameters for a device type, an operation period, and a MAC address to each device having a configuration to perform a normal TDMA operation, each device can autonomously set operation times for the master operation, the slave operation, and the pause operation. Therefore, it is possible to perform a relay transmission in a TDMA by using a single frequency without an interference.

Thus, the REP that performs a relay transmission by using signals of a single frequency can accommodate additional terminals. As a result, the conventional limitation on connection of the REPs, for example, limitation in which the REPs are only allowed to be arranged in series, can be relieved.

In the above operations, to prevent false detection of Beacons, it is preferable to start the slave operation after confirming that desired Beacons can be continuously received at operation period intervals.

While it is explained, in the above description, that a MAC address of the master is inserted in a Beacon in advance to identify the Beacon, it is applicable to configure as follows. A plurality of types of Beacons is defined in advance, a Beacon number instead of a MAC address of the master is set to the master, the slave, and the REP, the master transmits a Beacon corresponding to the set number, and the slave and the REP search for the Beacon corresponding to the set number when performing the slave operation. With this configuration, a MAC address need not be inserted in a Beacon to be transmitted.

### Embodiment 2.

In the first embodiment, it is explained that the operation period is set to each device as a parameter in advance. However, information about the operation period can be contained in a Beacon to be transmitted by the master. In this case, by extracting a MAC address of the master and the operation period from the Beacon when receiving the Beacon, the slave and the REP can recognize the operation period. As for the REP, when performing the master operation, the REP transmits a Beacon containing the received operation period.

In this manner, because a device that performs the master operation transmits a Beacon containing an operation period, a parameter for the operation period needs to be set only to a master. Therefore, setting can be simplified.

### Embodiment 3.

### (System configuration)

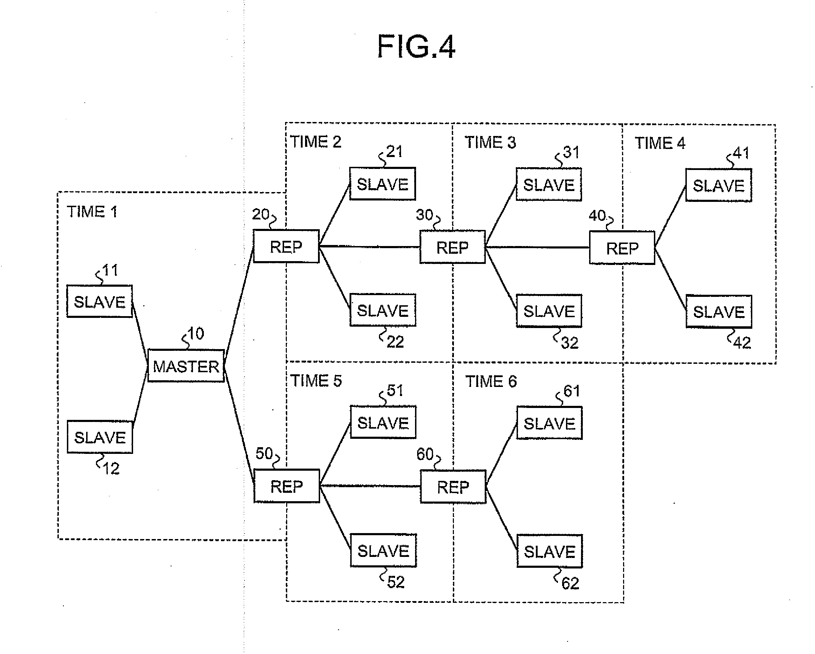

Fig. 4 is a schematic diagram illustrating a connection configuration of a data relay system according to a third embodiment of the present invention, and a concept of a data relay method employed in the data relay system. The data relay system shown in Fig. 4 is essentially different from the configuration of the first embodiment shown in Fig. 2 in that the two REPs (20 and 50) are connected to a master such that the REPs are arranged in parallel.

### (System operation)

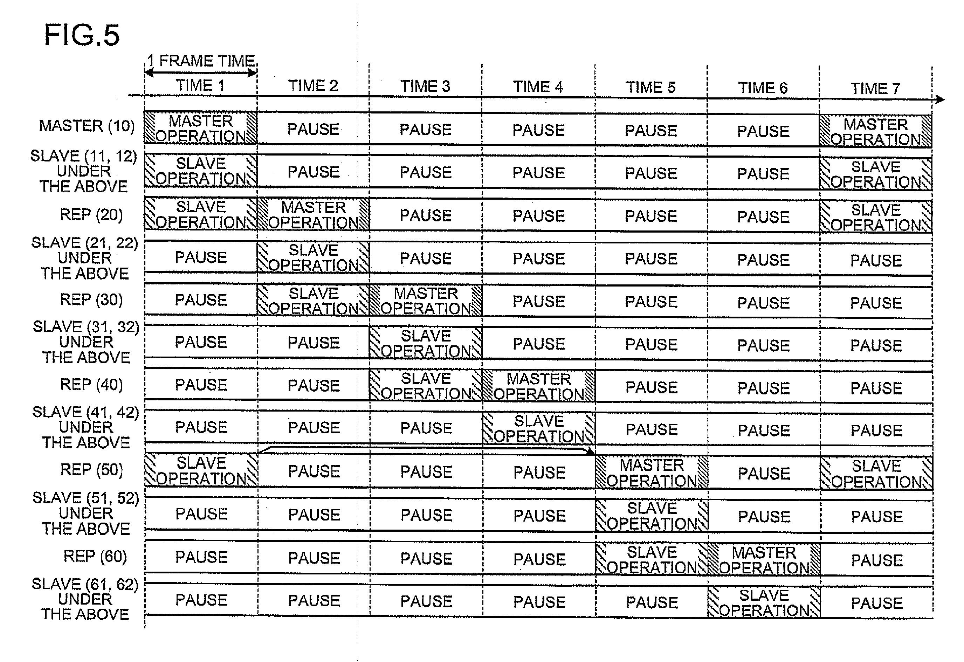

An operation by the data relay system according to the third embodiment is described below with reference to Figs. 4 and 5. Fig. 5 is a time chart illustrating operation timings of each device shown in Fig. 4. It is assumed that, similar to the first embodiment, all devices shown in Fig. 4 operate at a singly frequency F1, and a parameter for an operation period is set to each device. Besides, the operation period according to the third embodiment is set in the same manner as in the first embodiment. Concretely, the operation period "6" is set, which is the total number of the master and the REPs.

In Fig. 5, operations are performed as follows:
(1) At a time 1, the master 10 performs the master operation and the slaves 11, 12, and the REPs 20, 50 perform the slave operation.
(2) At a time 2, the REP 20 performs the master operation and the slaves 21, 22, and the REP 30 perform the slave operation.
(3) At a time 3, the REP 30 performs the master operation and the slaves 31, 32, and an REP 40 perform the slave operation.
(4) At a time 4, the REP 40 performs the master operation and the slaves 41 and 42 perform the slave operation.
(5) At a time 5, the REP 50 performs the master operation and the slaves 51, 52, and an REP 60 perform the slave operation. (5) At a time 6, the REP 60 performs the master operation and slaves 61 and 62 perform the slave operation.
(6) After a time 7, the operations at the times 1 to 6 are repeatedly performed.

It can be found from Fig. 5 and the above description that the operation by the REP 50 is different from that described in Fig. 3. Concretely, in the example shown in Fig. 3, all the REPs perform the master operation at a frame time right after performing the slave operation. On the other hand, in the example shown in Fig. 5, while each of the REPs 20, 30, 40, and 60 performs the master operation at a frame time right after performing the slave operation in the same manner, the RTEP device 50 performs the master operation after pausing as much as three frame times after performing the slave operation. This operation is necessary because the REPs are connected in a branched manner as shown in Fig. 4.

### (Timing recognition process by each device)

A process for recognizing an operation timing by each device is described below with reference to Fig. 5.

Similar to the first embodiment, parameters for a device type and an operation period are set to all three types of devices, i.e., the master, the slave, and the REP.
Furthermore, the following parameters are set for each device type:
(1) The master: a MAC address of own device.
(2) The slave: a MAC address of the master.
(3) The REP: a MAC address of the master, a MAC address of own device, and a switch delay.
   The operation period is set to "6" as described above.

In the third embodiment, a parameter for a "switch delay" is set. The switch delay indicates frame times from a completion of the slave operation to a start of the master operation by the REP. Specifically, in the example shown in Fig. 5, because the REPs 20, 30, 40, and 60 perform the master operation right after performing the slave operation, the switch delay=0. On the other hand, because the REP 50 performs the master operation after pausing as much as three frame times after performing the slave operation, the switch delay=3.

The operation timing for the master and the slave is set in the same manner as in the first embodiment. The master and the slave are caused to perform either the master operation or the slave operation once in every operation period at operation period intervals.

As for a timing of the slave operation by the REP is, similar to the first embodiment, the slave operation is performed at the "operation period" intervals from a frame time when a desired Beacon is received. On the other hand, a timing of the master operation by the REP is set so that the master operation is performed when frame times set by the "switch delay" elapse after a frame time when the slave operation is performed.

A method for setting a value of the "switch delay" is described below. When times at which the master and the REP perform the master operation are set as shown in Fig. 4, a time when the REP performs the slave operation (=TS) and a time when the REP performs the master operation (=TM) are set. At this state, the switch delay is obtained by the following Equation.

Switch delay=TM-TS-1

For example, for the REP 20, TM=2 and TS=1, leading to the switch delay=2-1-1=0.
On the other hand, for the REP 50, TM=5 and TS=1, leading to the switch delay=5-1-1=3.

In this manner, according to the third embodiment, the parameters for a device type, an operation period, a MAC address, and a switch delay are set to each device having a configuration to perform a normal TDMA operation. Therefore, even when repeater devices are connected in a branched manner in a network configuration, each device can autonomously set operation times for the master operation, the slave operation, and the pause operation. As a result, it is possible to perform a relay transmission in a TDMA by using a single frequency while preventing an interference.

While it is explained, in the third embodiment, that the parameters for the operation period and the switch delay are set to each device in advance, the parameters for the operation period and the switch delay can be contained in a Beacon to be transmitted by the master.

### Embodiment 4.

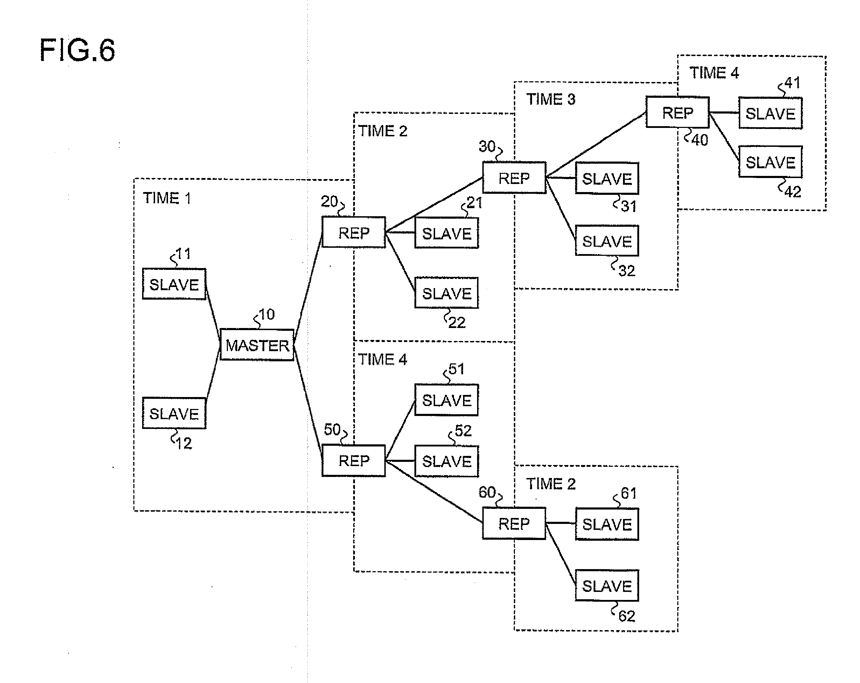

Fig. 6 is a schematic diagram illustrating a connection configuration of a data relay system according to a fourth embodiment of the present invention, and a concept of a data relay method employed in the data relay system. The data relay system shown in Fig. 6 has the same device configuration (topology) as that of the second embodiment shown in Fig. 4. However, it is assumed that the REP 30, the REP 20 accommodating the slaves 21 and 22, and the REP 60 accommodating the slaves 61 and 62 are arranged such that a distance that can hardly cause an interference is secured from one to the other. It is also assumed that the REP 60, the REP 50 accommodating the slaves 51 and 52, and the REP 40 accommodating the slaves 41 and 42 are arranged such that a distance that can hardly cause an interference is secured from one to the other.

### (System operation)

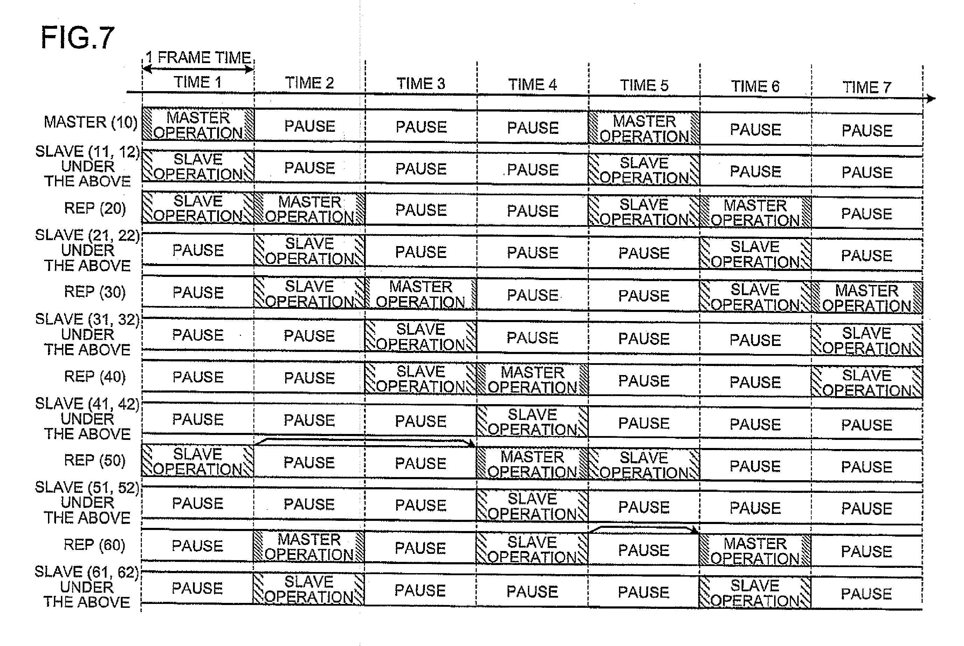

An operation by the data relay system according to the fourth embodiment is described below with reference to Figs. 6 and 7. Fig. 7 is a time chart illustrating operation timings of each device shown in Fig. 6. It is assumed that, similar to the first embodiment, all devices shown in Fig. 6 operate at a singly frequency F1, and a parameter for an operation period is set to each device. The operation period according to the fourth embodiment is, unlike the third embodiment, set to "4" instead of "6" that is the total number of the master and the REPs.

In Fig. 7, operations are performed as follows:
(1) At a time 1, the master 10 performs the master operation and the slaves 11, 12, and the REPs 20, 50 perform the slave operation.
(2) At a time 2, the REP 20 performs the master operation and the slaves 21, 22, and the REP 30 perform the slave operation; and the REP 60 performs the master operation and the slaves 61 and 62 perform the slave operation.
(3) At a time 3, the REP 30 performs the master operation and the slaves 31, 32, and the REP 40 perform the slave operation.
(4) At a time 4, the REP 40 performs the master operation and the slaves 41 and 42 perform the slave operation; and the REP 50 performs the master operation and the slaves 51, 52, and the REP 60 perform the slave operation.
(5) After a time 5, the operations at the times 1 to 4 are repeatedly performed.

The operation period is set to "4" in each device. On the other hand, the switch delay for the REP is set as follows:
(1) The REPs 20, 30, 40: the switch delay=0.
(2) The REP 50: the switch delay=2.
(3) The REP 60: the switch delay=1.

The configuration shown in Fig. 6 is an example for arranging a pair of the REPs that can hardly cause an interference even when the REPs operate at the same time. In such a configuration, the operation period can be set smaller than the total number of the master and the REPs. Therefore, the operation period can be set shorter than that of the third embodiment even with the same configuration (topology). As a result, a delay time for relaying data can be reduced.

The parameters necessary for setting operation timings are the operation period and the switch delay, similar to the third embodiment. Therefore, by setting the parameters for the operation period and the switch delay, each device can autonomously set operation times for the master operation, the slave operation, and the pause operation. As a result, it is possible to relay data in a TDMA while preventing an interference. Furthermore, because the REPs that can hardly cause an interference with each other operate at the same time, the operation period can be reduced than that of the third embodiment. As a result, a delay time can be reduced.

### Embodiment 5.

### (System configuration)

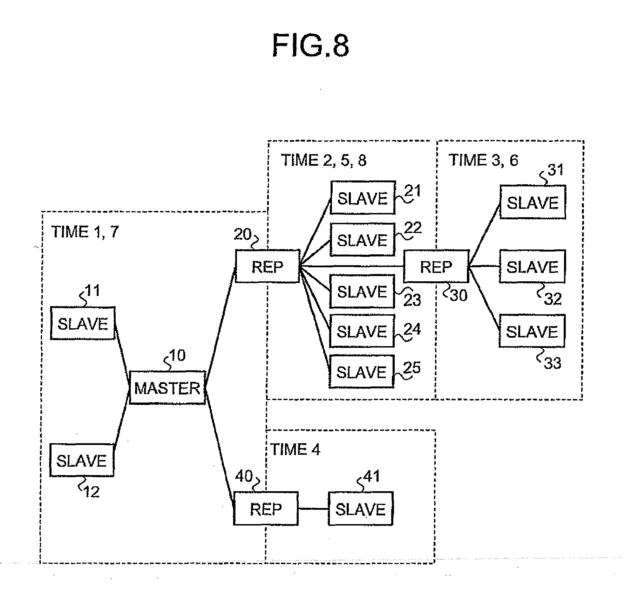

Fig. 8 is a schematic diagram illustrating a connection configuration of a data relay system according to a fifth embodiment of the present invention, and a concept of a data relay method employed in the data relay system. In the embodiments described above, examples in which either the master operation or the slave operation is performed once in every operation period are explained. On the other hand, in the fifth embodiment, a data relay method in which some devices perform two or more master operations or slave operations is explained. With this method, it is possible to improve operation frequency of a slave that accommodates a large number of slaves or a slave that is required to achieve high throughput.

### (System operation)

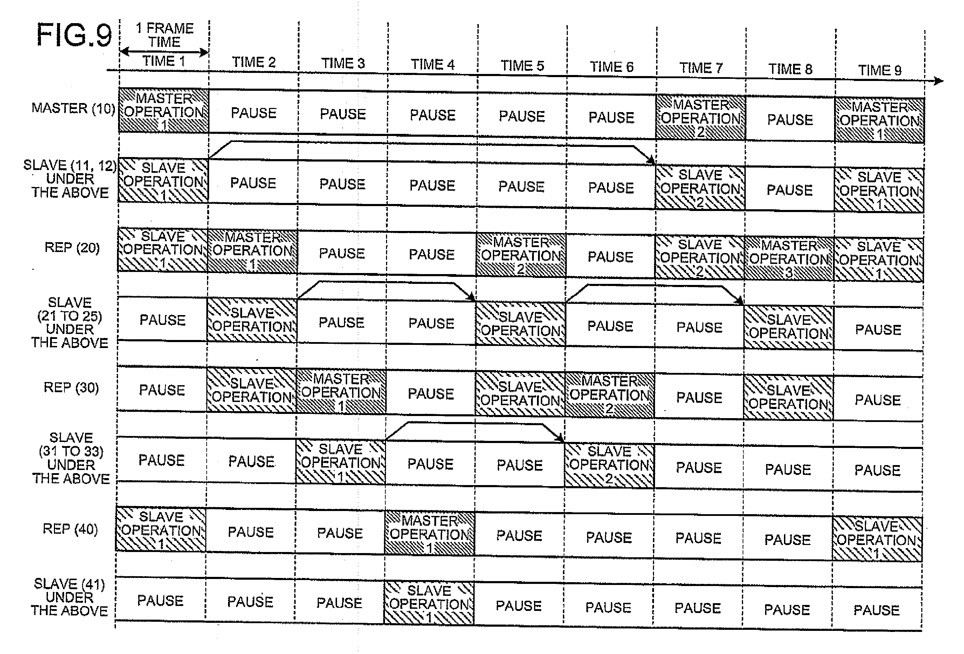

An operation by the data relay system according to the fifth embodiment is described below with reference to Figs. 8 and 9. Fig. 9 is a time chart illustrating operation timings of each device shown in Fig. 8. It is assumed that, similar to the first embodiment, all devices shown in Fig. 8 operate at a single frequency F1, and a parameter for an operation period is set to each device. The operation period according to the fifth embodiment is, unlike the first, the second, and the third embodiments, set to "8".

In Fig. 9, operations are performed as follows:
(1) At a time 1, the master 10 performs the master operation and the slaves 11, 12, and the REPs 20, 40 perform the slave operation.
(2) At a time 2, the REP 20 performs the master operation and the slaves 21 to 25 and the REP 30 perform the slave operation.
(3) At a time 3, the REP 30 performs the master operation and the slaves 31 to 33 perform the slave operation.
(4) At a time 4, the REP 40 performs the master operation and the slave 41 performs the slave operation.
(5) At a time 5, the REP 20 performs the master operation and the slaves 21 to 25 and the REP 30 perform the slave operation.
(6) At a time 6, the REP 30 performs the master operation and the slaves 31 to 33 perform the slave operation.
(7) At a time 7, the master 10 performs the master operation and the slaves 11, 12, and the REPs 20, 40 perform the slave operation.
(8) At a time 8, the REP 20 performs the master operation and the slaves 21 to 25 and the REP 30 perform the slave operation.
(9) After a time 9, the operations at the times 1 to 8 are repeatedly performed.

As described above, the operation period according to the fifth embodiment is set to "8", which is larger than the total number of the master and the REPs. Accordingly, the master 10 performs the master operation twice within a single operation period, the REP 20 performs the master operation three times within a single operation period, the REP 30 performs the master operation twice within a single operation period, and the REP 40 performs the master operation once within a single operation period.

### (Timing recognition process by each device)

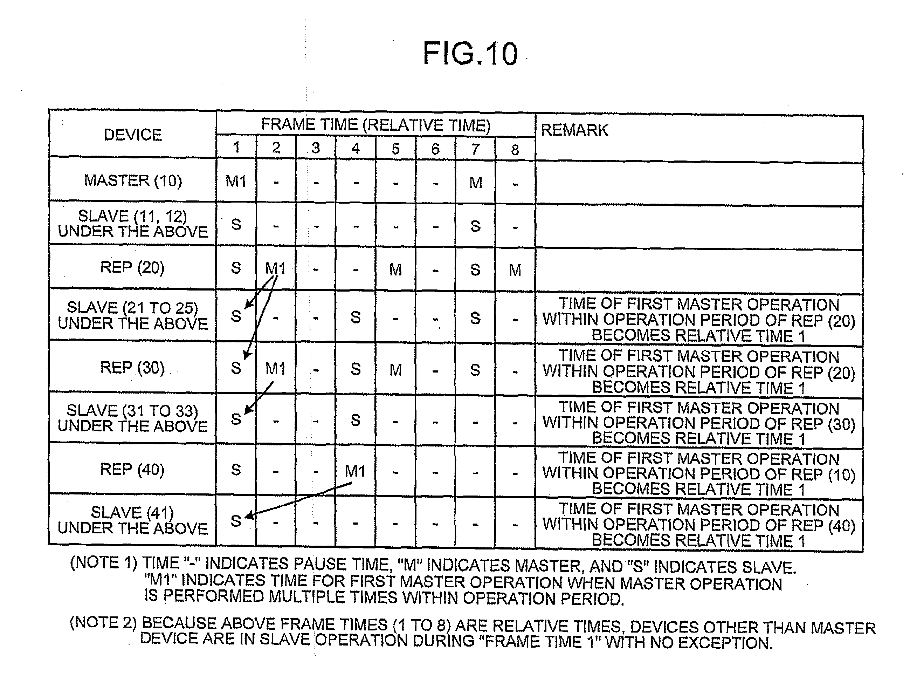

A process for recognizing an operation timing by each device is described below with reference to Figs. 9 and 10. Fig. 10 is a table illustrating operation timings at which each device performs the master operation or the slave operation within an operation period.

The following parameters are set to all three types of devices, i.e., the master, the slave, and the REP:
(1) A device type (set one of the master, the slave, and the REP) .
(2) An operation period.
(3) An operation table.

Furthermore, the following parameters are set for each device type:
(1) The master: a MAC address of own device.
(2) The slave: a MAC address of the master.
(3) The REP: a MAC address of the master and a MAC address of own device.

At this state, each device stores therein data of corresponding one row in the table shown in Fig. 10. More particularly, the master 10 stores therein a table containing "M1" for a frame time 1 and "M" for a frame time 7, and the REP 20 stores therein a table containing "S" for the frame times 1 and 7, "M1" for a frame time 2, and "M" for frame times 5 and 8. Here, "M" indicates a relative time for performing the master operation and "S" indicates a relative time for performing the slave operation. Besides, "M1" indicates the first master operation when the master operation is performed multiple times within the operation period. The values of the frame times described here indicate "relative times", which are different from "times" shown in Fig. 8. Thus, devices other than the master perform the slave operation during "a frame time 1" with no exception.

Returning to Fig. 10, at frame times set as "M" or "M1" in the operation table, the master and the REP transmit a Beacon indicating a start of a frame time at the head of the frame time. At this time, a MAC address of own device is inserted in the Beacon to be transmitted. Besides, at frame times corresponding to "M1", information indicating "M1" (1-bit is enough) is inserted in the Beacon to be transmitted.

The master 10 recognizes an arbitrary timing as the frame time 1 when booted, performs the master operation based on information "M1" set for the frame time 1, inserts the information "M1" in a Beacon, and transmits the Beacon. Thereafter, the operation table is read out every frame time. At the frame time 7, because "M" is set in the operation table, the master 10 performs the master operation. At other times, the master 10 pauses. Thereafter, the operation is repeated every operation period, that is, operation period=8 (frame time x 8) .

The slaves 11 and 12 monitor and examine Beacons until receiving a Beacon corresponding to a MAC address of the master and containing "M1". Upon receiving a desired Beacon, the slaves 11 and 12 recognize a frame time at that time as the frame time 1, and perform the slave operation. Thereafter, the slaves 11 and 12 operate based on the operation table. In the fifth embodiment, the slaves 11 and 12 perform the slave operation at the frame time 7.

The REP 20 monitor and examine Beacons until receiving a Beacon corresponding to a MAC address of the master and containing "M1". Upon receiving a desired Beacon, the REP 20 recognizes a frame time at that time as the frame time 1, and performs the slave operation. Thereafter, the REP 20 operates based on the operation table. In the fifth embodiment, the REP 20 performs the master operation set as "M1" at the frame time 2 (that is, the first master operation out of the master operation to be performed multiple times), the master operation at the frame times 5 and 8, and the slave operation at the frame time 7.

The REP 30 monitors and examines Beacons until receiving a Beacon corresponding to a MAC address of the master and containing "M1". Upon receiving a desired Beacon, the REP 30 recognizes a frame time at that time as the frame time 1, and performs the slave operation. Thereafter, the REP 30 operates based on the operation table. In the fifth embodiment, the REP 30 performs the master operation set as "M1" at the frame time 2, the master operation at the frame time 5, and the slave operation at a frame time 4 and the frame time 7. In the operation by the above devices, because a time when the REP 20 that is an upper-layer master performs the "M1" operation is recognized as the frame time 1, the frame times indicated in the operation table shown in Fig. 10 do not correspond to the times shown in Fig. 9. Concretely, the frame times shown in Fig. 10 are shifted to the left by one.

Similarly, the other slaves and REPs recognize a timing when receiving a Beacon corresponding to a MAC address of the master and containing "M1" as the frame time 1, and operate based on the operation table.

Due to the above operation, a relay operation can be performed based on operation frequency that is variably set for each device and without accompanying an interference. Specifically, by increasing operation frequency of a device that accommodates a large number of slaves and handles a large amount of traffic, delay in relaying data can be reduced.

In the above description, it is explained that the operation table is initially set for each device (corresponding to one row in Fig. 10). However, it is applicable to set a table containing all rows in Fig. 10 in the master 10 and not to initially set the operation table in other devices while information about what row in the operation table is to be referred to is set in the other devices. In this case, with a configuration in which the master 10 inserts all operation-table information in a Beacon and transmits the Beacon to lower-level devices, individual setting to the lower-level devices can be omitted. Furthermore, lower-level REPs perform only the slave operation until receiving the operation table (because the REPs cannot recognize a timing for performing the master operation until receiving the operation table, while they can recognize a timing for performing the slave operation by searching for a Beacon containing a MAC address of the master). As a method of sending the operation table, it is applicable to send the operation table through a communication via an application layer instead of use of the Beacon. In this case, the slave operation is performed until the operation table is obtained.

Embodiment 6.
In the fifth embodiment described above, the parameters for the operation period and the operation table need to be set to each device in advance. Therefore, only by the method according to the fifth embodiment, an operation timing cannot be changed during an operation. Furthermore, in the method according to the fifth embodiment, a device needs to be reset for changing the parameters. Therefore, communication is disconnected during change of the parameters. In a sixth embodiment of the present invention, a method of changing an operation timing during an operation is described below.

An outline of the method of changing an operation timing during an operation is described below. The operation at a normal time (at a time of an operation) is the same as that of the fifth embodiment, and the same explanation is omitted.

When changing an operation timing, it is necessary to change the operation table. Specifically, information about a switch timing for switching a current operation table to a new operation table is sent from a master to lower-level devices, and switching to the new operation table is performed at one time. The switch timing is set to the same timing as when the last frame time in an operation period is finished.

The new operation table can be notified by being inserted in a Beacon by a device performing a master operation, or through a communication via an application layer. As for the switch timing for switching to the new operation table, switching needs to be performed in units of frame time. Therefore, when the switch timing is notified through a process using an application layer in a large-scale network, a process for switching to the new operation table may not be performed on all the devices at the same time. In this case, it is preferable to use a Beacon to notify the information about the switch timing.

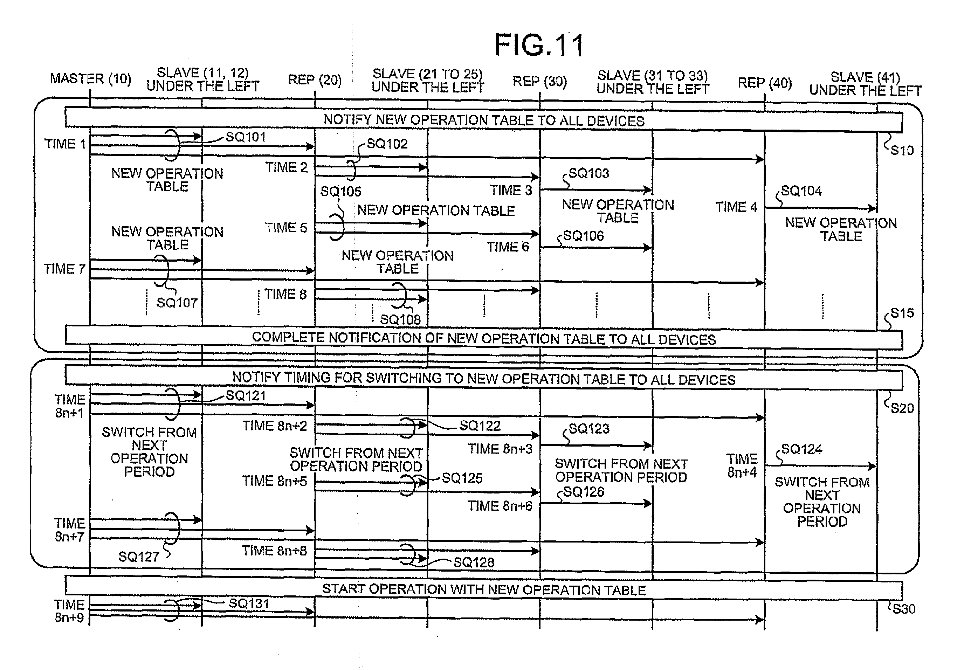

An operation for switching to a new operation table is described below with reference to Fig. 11. Fig. 11 is a sequence diagram illustrating an operation for switching to a new operation table.

The master 10 notifies information about a new operation table to the lower-level devices (Step S10). The notification is performed according to the operation timing chart shown in Fig. 9, which is set based on the current operation table shown in Fig. 10. Concretely, the new operation table is notified to all the devices in sequence as follows: from the master 10 to the slaves 11, 12, and the REPs 20, 40 (Sequence SQ101: the time 1); from the REP 20 to the slaves 21 to 25 and the REP 30 (Sequence SQ102: the time 2); from the REP 30 to the slaves 31 to 33 (Sequence SQ103: the time 3); from the REP 40 to the slave 41 (Sequence SQ104: the time 4); from the REP 20 to the slaves 21 to 25 and the REP 30 (Sequence SQ105: the time 5), from the REP 30 to the slaves 31 to 33 (Sequence SQ106: the time 6); from the master 10 to the slaves 11, 12, and the REPs 20, 40 (Sequence SQ107: the time 7); and from the REP 20 to the slaves 21 to 25 and the REP 30 (Sequence SQ108: the time 8). It is allowed to take a time for the notification. Furthermore, operations are continued based on the currently-used operation table until the information about the new operation table is notified.

It is assumed that the new operation table is notified to all the devices after a time n-times (n is a natural number) as long as the operation period elapses (Step S15). The time at this state is assumed as 8n (the operation period "8" x n) .

Next, from a time next to the time when the notification of the new operation table is completed, that is, a time 8n+1, the master 10 inserts information about the switch timing for switching to the new operation table in a Beacon, and notifies the switch timing for switching to the new operation table to all the devices in the same procedure as that for notifying the new operation table (Step S20, Sequences SQ121 to SQ128).

The information about the switch timing is set as, for example, "a timing of a next operation period". Because each device has recognized the current operation period, each device can recognize the switch timing based on such information. It is also applicable to send such information as "after a time L-times as long as the operation period elapses", instead of the information about the switch timing set as "a timing of a next operation period". In this case, all the devices decrement the value L every time the operation period is finished. Then, when L=1 (switching is to be performed at the next operation period), after the current operation period is finished, all the devices start operating with the new operation table.

Due to the operation through the above steps, the operation table can be changed during an operation, so that an operation can be performed flexibly depending on change in a network configuration when slaves are added or removed.

While it is explained, in the above description, that "the new operation table is notified to each device", when an operation is performed by using the parameters for the operation period and the switch delay without using the operation table as described in the first to the fifth embodiments, the following procedure is applicable. That is, information about the operation period and the switch delay is notified to each device by using a Beacon or an application layer similar to the above, and then, information about a switch timing is sent by using a Beacon so that the parameters are changed to new parameters (new operation period and new switch delay) when the current operation period is finished.

### Embodiment 7.

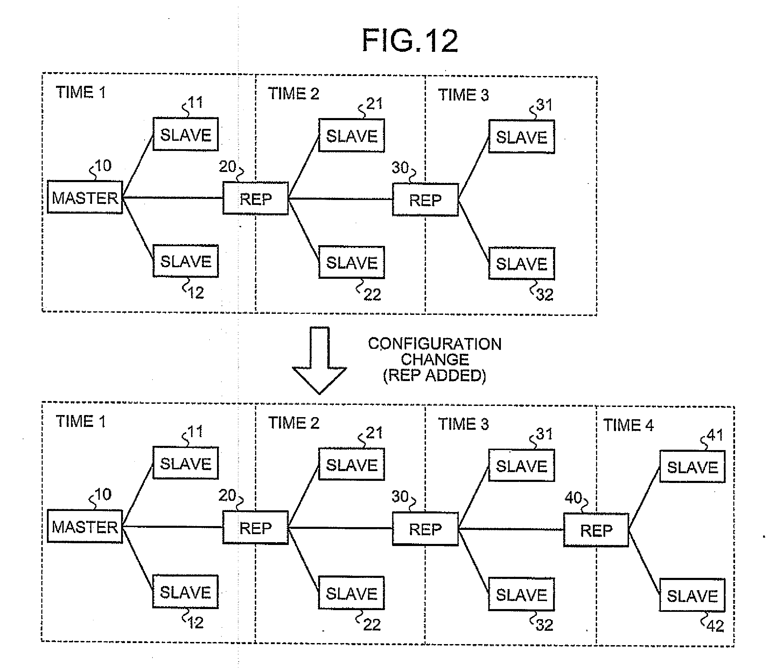

In the sixth embodiment, an example in which the operation table is changed during an operation is described. In a seventh embodiment of the present invention, an operation for adding a device is described below. As an example in which a device is added, it is assumed that, as shown in Fig. 12, when the master 10, the REPs 20, 30, and the slaves 11, 12, 21, 22, 31, 32 operate, the REP 40 is added for accommodating the slaves 41 and 42. At this state, the operation period is changed from "3" to "4".

In this case, it is possible to operate by setting a new parameter (the operation period=4) to all the devices and then rebooting all the devices. However, this operation causes disconnection of communication of the slaves 11, 12, 21, 22, 31, and 32 that are currently operating. Furthermore, because connection is established from upper-layer devices, a disconnection time increases in lower-level devices in a large-scale system. The seventh embodiment is extremely effective for improving the above situations.

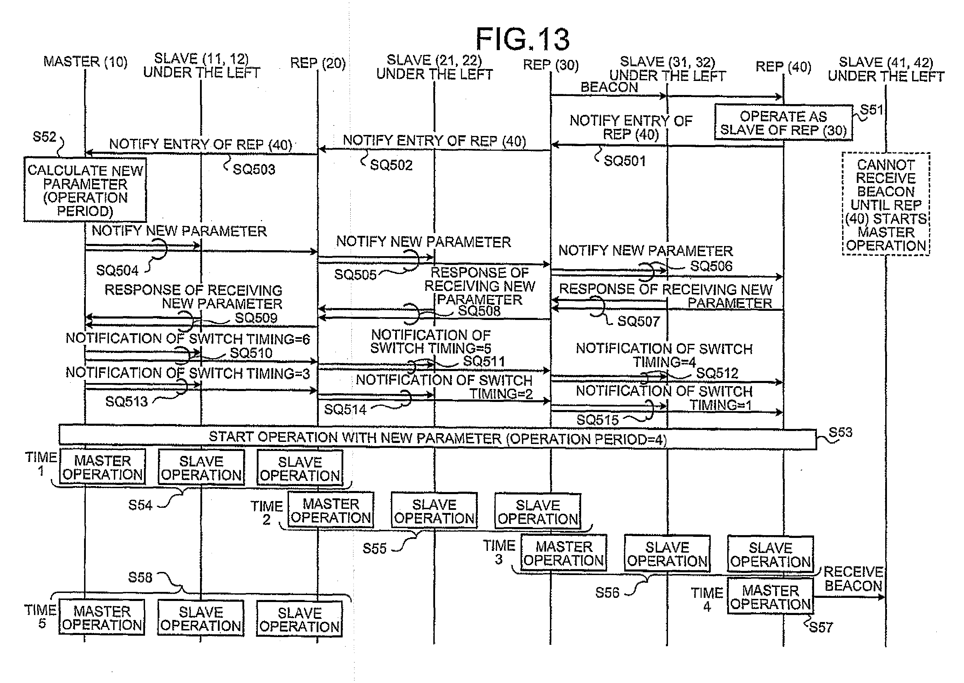

An operation for switching to a new parameter when a system configuration is changed is described below with reference to Fig. 13. Fig. 13 is a schematic diagram illustrating an operation for switching to a new parameter when a system configuration is changed.

It is assumed that, when operating in a device configuration shown in a top portion in Fig. 12, the slaves 41, 42, and the REP 40 are added, and the device configuration is changed to that shown in a bottom portion in Fig. 12. In this situation, while it is allowed to take a longer time for enabling the newly-added devices to start communication, it is preferable to prevent disconnection of the communication performed by the currently-set devices. Therefore, it is not preferable to change the operation period immediately. Alternatively, it is preferable to notify a change in the operation period to the REPs and the slaves that are currently operating, and then change the operation period at one time.

The newly-added REP 40 is caused to operate as a slave of the REP 30. More particularly, the REP 40 searches for a Beacon containing a MAC address of a desired master, and upon detecting the Beacon, starts the slave operation at a frame time at that time (Step S51). When information about the operation period is contained in the Beacon as described in the second embodiment, the operation period can be recognized by searching for the Beacon, and the slave operation is repeated based on the operation period.

The REP 40 notifies that the REP 40 is an REP (entry notification) to the REP 30 that is an upper-layer master (Sequence SQ501). When recognizing that the added device is the REP, because it is necessary to set an operation period in which the REP operates as a master, the REP 30 notifies entry of the REP 40 to the REP 20 that is an upper-layer master (Sequence SQ502). Similarly, the REP 20 notifies the entry of the REP 40 to the master 10 (Sequence SQ503).

The master 10 recognizes the entry of the REP 40, and calculates a new parameter (Step S52). At this state, when the devices are connected in series, it is sufficient to notify only the operation period. However, if the devices are connected in a branched manner, a parameter for a switch delay (pause time) needs to be notified in addition to the operation period. In this example, because it is assumed that the devices are connected in series, the switch delay for each REP becomes zero. Therefore, it is sufficient to calculate only the operation period.

The new parameter (the operation period) calculated by the master 10 is notified from the master 10 to the lower-level devices (the REPs and the slaves) (Sequences SQ504 to SQ506). Because the currently-set devices continuously operate with the current parameters, it is allowed to take a longer time for the notification to prevent disconnection of communication of the currently-set devices. Therefore, the notification can be sent through a communication via an application layer or by inserting the new parameter in a Beacon. However, when the notification is sent via the application layer, the notification needs to be sent individually to belonging devices because of one-to-one communication by the application layer. On the other hand, when the notification is sent by using the Beacon, the notification can be sent through a broadcast to belonging devices, so that the notification can be sent at one time.

In the sequences shown in Fig. 13, the REPs and the slaves are configured to return "a response of receiving the new parameter", so that when the new parameter cannot be notified due to noise or the like, the notification can be recovered (Sequences SQ507 to SQ509). A device that performs the master operation retransmits "a notification of the new parameter" to the belonging devices that have not returned "a response of receiving the new parameter".

When confirming that all the devices have been notified of the new parameter, the master 10 notifies timing information for switching to the new parameter as "a notification of a switch timing (Sequences SQ510 to SQ515). The timing information is set in units of frame time, and to be an integer multiple of the current operation period. In the example shown in Fig. 13 where the operation period is set to 3, switching is to be performed after six frame times elapse, which is twice the operation period. Because it is necessary to precisely set the switch timing in units of frame time, it is preferable to notify the switch timing by inserting it in a Beacon instead of use of an application layer.

The notification of the timing information for switching to the new parameter is described in detail below. The master 10 notifies that the switch timing=6 to the slaves 11, 12, and the REP 20 under the master 10 (Sequence SQ510). Because the REP 20 is to perform the master operation at a next frame time, the REP 20 decrements the value of the switch timing received at the previous time and notifies that the switch timing=5 (Sequence SQ511). Similarly, the REP 30 notifies that the switch timing=4 (Sequence SQ512). At a subsequent time that is an operation timing at which the master 10 operates, while the master 10 has notified that the switch timing=6 at the previous notification timing, the master 10 notifies that the switch timing=3, which is obtained by subtracting 3 that is the current operation period from 6 that has been notified that the switch timing=6 at the previous notification timing (Sequence SQ513). Subsequently, each of the REPs decrements the value of the switch timing and notifies a resultant switch timing to the lower-level devices (Sequences SQ514 and SQ515). The REP 40 accommodating the newly-added slaves 41 and 42 obtains a time for starting to operate with the new parameter based on the value of the switch timing contained in the Beacon sent by the REP 30. Concretely, an operation with the new parameter is started at a frame time when the switch timing=0 (Step S53).

In the example shown in Fig. 13, because switch timing=0, the REP 40 can perform both an operation with the new parameter (the operation period=4) and the master operation at a frame time next to the frame time when the notification that switch timing=1 is received from the REP 30. Concretely, if a time when the master 10 starts the master operation is assumed to be a time 1, the REP 40 starts the master operation at a time 4 (Step S57). Other devices (the master, the REPs, and the slaves) start operations (the master operation and the slave operation) with the new parameters (the operation period and the switch delay) at a time when the switch timing=0 (Steps S54 to S56 and S58).

Meanwhile, the slaves 41 and 42 under the REP 40 are enabled to receive a Beacon containing a MAC address of the master 10 after the REP 40 starts the master operation, thereby being enabled to communicate with the REP 40.

In the above description, an operation for adding a device is explained with an example in which "an operation is performed with the parameters for the operation period and the switch delay without using the operation table" as described in the first to the fifth embodiments. However, even in a case where "an operation is performed with the operation table" as described in the sixth and the seventh embodiments, the same method can be employed. In this case, information about a new operation table is notified to each device by using a Beacon or an application layer in a manner similar to the above, and then information about a timing for switching to the new operation table is sent by using a Beacon.

With the above steps, even when a new REP is added, the new REP can be accommodated without disconnecting the communication by current devices.

### INDUSTRIAL APPLICABILITY

As described above, the present invention is effective as a data relay system and a data relay method for relaying data by using a single frequency between devices at distant locations.

## Claims

1. A data relay system comprising:
a base station device;
at least one relay device that is connected to the base station device by a time division multiple access and relays data from or to the base station device by using a signal of a single frequency; and
a sub station device that is connected at least to the relay device by a time division multiple access, wherein the relay device functions as a base station device for the sub station device connected to the relay device.

2. The data relay system according to claim 1, wherein parameters for a device type, an identification address set for the device type, and an operation period for a time division multiple access are set to all the base station device, the relay device, and the sub station device, while a parameter for a switch delay for setting an operation timing of the relay device is set to the relay device, and
the base station device, the relay device, and the sub station device operate based on the parameters for the operation period and the switch delay.

3. The data relay system according to claim 2, wherein
the parameters for the operation period and the switch delay are sent from a device operating as a base station device by using a beacon signal or a signal via an application layer when the data relay system is activated.

4. The data relay system according to claim 3, wherein
a new parameter sent from an upper-layer device by using the beacon signal or the signal via the application layer is temporarily stored in the relay device or the sub station device, and
a signal indicating a switch timing for switching a current parameter to the new parameter at one time is sent from the base station device by using the beacon signal.

5. A data relay system according to claim 1, wherein parameters for a device type, an identification address set for the device type, an operation period for a time division multiple access, and an operation table indicating a relative operation time for each device are set to all the base station device, the relay device, and the sub station device, and the base station device, the relay device, and the sub station device operate based on the parameters for the operation period and the operation table.

6. The data relay system according to claim 5, wherein
the parameters for the operation period and the operation table are sent from a device operating as a base station device by using a beacon signal or a signal via an application layer when the data relay system is activated.

7. The data relay system according to claim 6, wherein
a new operation table sent from an upper-layer device by using the beacon signal or the signal via the application layer is temporarily stored in the relay device or the sub station device, and
a signal indicating a switch timing for switching a current operation table to the new operation table at one time is sent from the base station device by using the beacon signal.

8. The data relay system according to any one of claims 1 to 7, wherein the parameter for the operation period corresponds to a total number of the base station device and the relay device in the data relay system.

9. The data relay system according to any one of claims 1 to 7, wherein the parameter for the operation period is set to be smaller than a total number of the base station device and the relay device in the data relay system.

10. The data relay system according to any one of claims 1 to 7, wherein
the parameter for the operation period is set to a value larger than a total number of the base station device and the relay device in the data relay system, and
a specified device out of the base station device and the relay device operates as the base station device multiple times within the operation period.

11. A data relay method that is implemented by a relay device that is connected to a base station device by a time division multiple access, connected to a sub station device by a time division multiple access, and relays data between the base station device and the sub station device by using a signal of a single frequency, wherein
each of the base station device and the sub station devices contains parameters for a device type, an identification address set for the device type, and an operation period for a time division multiple access, and
the relay device contains parameters for a device type, an identification address set for the device type, an operation period for a time division multiple access, and
a switch delay for setting an operation timing of the relay device, the data relay method comprising:
a parameter calculation step of calculating new parameters for the operation period and the switch delay;
a new-parameter notification step of notifying the new parameters calculated at the parameter-calculation step to a lower-level device; and
a switch-timing notification step of notifying a timing for switching to the new parameters.

12. The data relay method according to claim 11, further comprising:
an entry notification step of notifying an entry of a new relay device to an upper-layer device, wherein
the parameter calculation step includes calculating new parameters for the operation period and the switch delay based on an entry position of the new relay device notified at the entry notification step.

13. The data relay method according to claim 11 or 12, further comprising a response-reception notification step of notifying receiving of a response to a device that has notified the new parameters, between the new-parameter notification step and the switch-timing notification step.

14. A data relay method that is implemented by a relay device that is connected to a base station device by a time division multiple access, connected to a sub station device by a time division multiple access, and relays data between the base station device and the sub station device by using a signal of a single frequency, wherein
each of the base station device and the sub station devices contains parameters for a device type, an identification address set for the device type, and an operation period for a time division multiple access, and
the relay device contains parameters for a device type, an identification address set for the device type, an operation period for a time division multiple access, and
an operation table indicating a relative operation time for each device, the data relay method comprising:
an operation-table calculation step of calculating a new operation table;
a new-operation-table notification step of notifying the new operation table calculated at the operation-table calculation step to a lower-level device; and
a switch-timing notification step of notifying a timing for switching to the new parameters.

15. The data relay method according to claim 14, further comprising:
an entry notification step of notifying an entry of a new relay device to an upper-layer device, wherein
the operation-table calculation step includes calculating a new operation table based on an entry position of the new relay device notified at the entry notification step.

16. The data relay method according to claim 14 or 15, further comprising a response-reception notification step of notifying receiving of a response to a device that has notified the new operation table, between the new-operation-table notification step and the switch-timing notification step.
